# EUROPEAN PATENT APPLICATION

(11) **EP 4 387 218 A1**
(43) Date of publication of application: **19.06.2024**
(21) Application number: 22855443.2
(22) Date of filing: 09.08.2022
(51) Int. Cl.: H04N 5/00

(54) **VIDEO RECORDING METHOD AND APPARATUS, ELECTRONIC DEVICE, AND MEDIUM**

(30) Priority: 13.08.2021 CN 202110932876
(71) Applicant: Vivo Mobile Communication Co., Ltd., Dongguan, Guangdong 523863 (CN)
(72) Inventor: OU, Zhiming, Hangzhou, Zhejiang 311100 (CN); LI, Tao, Hangzhou, Zhejiang 311100 (CN)
(74) Representative: Murgitroyd & Company
(86) International application number: PCT/CN2022/111189
(87) International publication number: WO 2023/016462

(57) **Abstract**

This application discloses a video recording method and apparatus, an electronic device, and a medium. The method includes: in a case that the rollable display includes M recording regions, receiving a first input performed by a user on a target recording region, where the target recording region is at least one of the M recording regions; and in response to the first input, adjusting a recording status corresponding to the target recording region, where M is an integer greater than or equal to 2.

## Description

### CROSS-REFERENCE TO RELATED APPLICATIONS

This application claims priority to Chinese Patent Application No. 202110932876.X filed in China on August 13, 2021, which is incorporated herein by reference in its entirety.

### TECHNICAL FIELD

This application pertains to the field of shooting technologies, and specifically relates to a video recording method and apparatus, an electronic device, and a medium.

### BACKGROUND

With the increasingly powerful shooting and recording capabilities of electronic devices, users have higher requirements for video file recording.

Currently, when a user wants to record a video file using an electronic device, the user first triggers the electronic device to display a shooting preview interface. Then, the user taps a "shoot" control in the shooting preview interface. Finally, the user taps the "shoot" control again to end the recording to obtain a video file. However, the above video recording manner is too monotone.

### SUMMARY

The embodiments of this application are intended to provide a video recording method and apparatus, an electronic device, and a medium, which can solve the problem that manners of video file recording are too monotone.

According to a first aspect, an embodiment of this application provides a video recording method applied to a video recording apparatus with a rollable display. The method includes in a case that the rollable display includes M recording regions, receiving a first input performed by a user on a target recording region, where the target recording region is at least one of the M recording regions; and in response to the first input, adjusting a recording status corresponding to the target recording region, where M is an integer greater than or equal to 2.

According to a second aspect, an embodiment of this application provides a video recording apparatus. The video recording apparatus includes a rollable display, and the video recording apparatus includes a receiving module and an adjusting module. The receiving module is configured to: in a case that the rollable display includes M recording regions, receive a first input performed by a user on a target recording region, where the target recording region is at least one of the M recording regions. The adjusting module is configured to: in response to the first input received by the receiving module, adjust a recording status corresponding to the target recording region, where M is an integer greater than or equal to 2.

According to a third aspect, an embodiment of this application provides an electronic device, where the electronic device includes a processor, a memory, and a program or an instruction stored in the memory and executable on the processor, and when the program or the instruction is executed by the processor, the steps of the method according to the first aspect are implemented.

According to a fourth aspect, an embodiment of this application provides a readable storage medium, where the readable storage medium stores a program or an instruction, and when the program or the instructions is executed by a processor, the steps of the method according to the first aspect are implemented.

According to a fifth aspect, an embodiment of this application provides a chip, where the chip includes a processor and a communications interface, the communications interface is coupled to the processor, and the processor is configured to run a program or an instruction so as to implement the method according to the first aspect.

In the embodiments of this application, in the case that the rollable display includes M recording regions, the video recording apparatus can adjust the recording status corresponding to the target recording region after receiving the first input performed by a user on the target recording region. The target recording region is at least one of the M recording regions, M being a positive integer greater than or equal to 2. As compared with the related art in which video recording can be started or ended only by tapping a shooting control, the video recording apparatus in this application can split the rollable display into M different recording regions, and based on an input by a user, flexibly adjust the recording status corresponding to each recording region, enriching the manners of video file recording.

### BRIEF DESCRIPTION OF DRAWINGS

FIG. 1 is a schematic flowchart of a video recording method according to an embodiment of this application;
FIG. 2 is a first schematic diagram of an interface applied to a video recording method according to an embodiment of this application;
FIG. 3 is a second schematic diagram of an interface applied to a video recording method according to an embodiment of this application;
FIG. 4 is a third schematic diagram of an interface applied to a video recording method according to an embodiment of this application;
FIG. 5 is a schematic diagram of camera distribution of a video recording apparatus according to an embodiment of this application;
FIG. 6 is a fourth schematic diagram of an interface applied to a video recording method according to an embodiment of this application;
FIG. 7 is a fifth schematic diagram of an interface applied to a video recording method according to an embodiment of this application;
FIG. 8 is a schematic structural diagram of a video recording apparatus according to an embodiment of this application;
FIG. 9 is a first schematic structural diagram of an electronic device according to an embodiment of this application; and
FIG. 10 is a second schematic structural diagram of an electronic device according to an embodiment of this application.

### DESCRIPTION OF EMBODIMENTS

The following clearly describes the technical solutions in embodiments of this application with reference to the accompanying drawings in the embodiments of this application. Apparently, the described embodiments are some but not all embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that the data used in this way is interchangeable in appropriate circumstances such that the embodiments of this application can be implemented in other orders than the order illustrated or described herein. Moreover, the term "first" or "second" usually distinguishes between objects of same type and does not limit an object quantity. For example, there may be one first object or a plurality of first objects. In addition, "and/or" in the specification and claims represents at least one of connected objects, and the character "/" generally indicates that the contextually associated objects have an "or" relationship.

The following describes in detail the video recording method provided in the embodiments of this application through specific embodiments and application scenarios thereof with reference to the accompanying drawings.

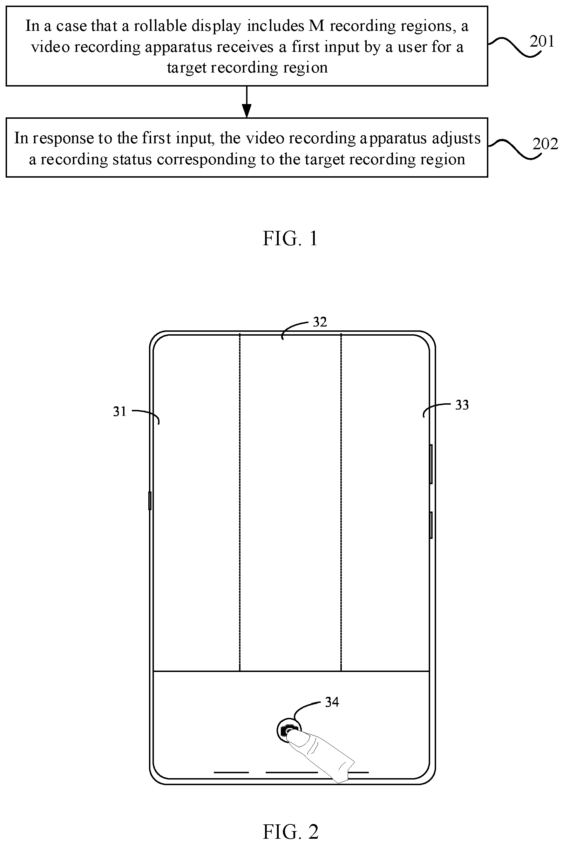

FIG. 1 is a schematic flowchart of a video recording method according to an embodiment of this application. The method is applied to a video recording apparatus with a rollable display and includes steps 201 and 202.

Step 201: In a case that the rollable display includes M recording regions, the video recording apparatus receives a first input performed by a user on a target recording region.

The target recording region is at least one of the M recording regions, M being an integer greater than or equal to 2.

In this embodiment of this application, the M recording regions can be displayed on the rollable display in any arrangement. For example, the M recording regions can be displayed vertically on the rollable display or horizontally on the rollable display. This is not limited in the embodiments of this application.

In this embodiment of this application, the M recording regions can correspond to the same recording status or different recording statuses. This is not limited in the embodiments of this application. It can be understood that when the target recording region includes multiple recording regions, the multiple recording regions can correspond to the same recording status or different recording statuses. This is not limited in the embodiments of this application. For example, the recording status can include a recording state or a non-recording state. This is not limited in the embodiments of this application. In an example, the non-recording state can be understood as a paused recording state. In another example, the non-recording state can be understood as a state of not starting recording.

In this embodiment of this application, the video recording apparatus has at least one camera.

In this embodiment of this application, the M recording regions can correspond to the same camera or different cameras. This is not limited in the embodiments of this application. For example, the M recording regions correspond to the same camera, and the M recording regions are used for displaying an image captured by the same camera, where different recording regions can display different shooting subjects. Alternatively, each of the M recording regions corresponds to one camera, and each recording region is used for displaying an image captured by a corresponding camera.

In this embodiment of this application, the M recording regions can be set by a system by default or set by a user. This is not limited in the embodiments of this application. For example, in a case that the video recording apparatus includes four cameras, the rollable display of the video recording apparatus can include four recording regions by default.

In this embodiment of this application, the first input can be a tap input performed by a user on the target recording region, a voice command input performed by a user, or a specific gesture input performed by a user. The specific type of input can be determined depending on actual usage requirements, and is not limited in the embodiments of this application.

The specific gesture in this embodiment of this application can be a tap gesture, a slide gesture, a drag gesture, a pressure recognition gesture, a touch and hold gesture, an area change gesture, a double touch-and-hold gesture, a double tap gesture, or any other gesture. The tap input in this embodiment of this application can be a tap input, a double tap input, or an input of any number of taps, and can alternatively be a long touch-and-hold input or a short touch-and-hold input.

Step 202: In response to the first input, the video recording apparatus adjusts a recording status corresponding to the target recording region.

In this embodiment of this application, the adjusting a recording status corresponding to the target recording region can include any one of the following: changing the target recording region from a recording state to a non-recording state, in other words, pausing video recording of a shooting subject corresponding to the target recording region; and changing the target recording region from a non-recording state to a recording state, in other words, recording a video of a shooting subject corresponding to the target recording region.

Optionally, in this embodiment of this application, in a case that N recording regions out of the M recording regions are in a recording state, step 201 can specifically include the following step 201a.

Step 201a: The video recording apparatus receives a first input performed by a user on a first recording region.

The first recording region is at least one of the N recording regions, and the target recording region includes the first recording region, N being a positive integer.

For example, the N recording regions can be set by a system by default or set by a user. This is not limited in the embodiments of this application.

For example, the first input can specifically be a tap input performed by a user on the first recording region, a voice command input performed by a user, or a specific gesture input performed by a user. The specific type of input can be determined depending on actual usage requirements, and is not limited in the embodiments of this application.

Based on step 201a, the adjusting a recording status corresponding to the target recording region in step 202 can specifically include the following step 202a.

Step 202a: The video recording apparatus pauses video recording of a shooting subject corresponding to the first recording region.

For example, the shooting subject can be any subject. For example, the shooting subject can be a landscape, a person, an object, or the like, and this is not limited in the embodiments of this application.

For example, the video recording apparatus can pause video recording of the shooting subject corresponding to the first recording region and displays any one of frames of images in a recorded video corresponding to the first recording region. For example, the video recording apparatus can display the last frame of image in the recorded video of the shooting subject corresponding to the first recording region.

For example, as shown in FIG. 2, a fully unrolled rollable display of a mobile phone includes three horizontally arranged recording regions, which are a left recording region (that is, 31 in FIG. 2), a middle recording region (that is, 32 in FIG. 2), and a right recording region (that is, 33 in FIG. 2), respectively. The left recording region 31 and the right recording region 33 are in a recording state, and the middle recording region 32 is in a non-recording state. When the user wants the mobile phone to pause video recording of a shooting subject corresponding to the left recording region 31, the user can tap the left recording region 31 (that is, the first input). In this case, the mobile phone can pause video recording of the shooting subject corresponding to the left recording region 31.

It should be noted that the principle behind the video recording apparatus pausing video recording of the shooting subject corresponding to the first recording region and displaying any one of frames of images in the recorded video corresponding to the first recording region is as follows: a video clip is usually transmitted by a sensor (sensor) to a graphics processing unit (graphics processing unit, GPU) at 30 frames of images per second, and the GPU renders the video clip on the display of the electronic device. Therefore, after pausing the recording for the first recording region, the electronic device can select a current frame of video (that is, the last frame captured) corresponding to the first recording region and continuously render the corresponding image (that is, picture) and display it on the display until the recording corresponding to the first recording region resumes.

Optionally, in this embodiment of this application, in a case that X recording regions out of the M recording regions are in a non-recording state, step 201 can specifically include the following step 201b.

Step 201b: The video recording apparatus receives a first input performed by a user on a second recording region.

The second recording region is at least one of the X recording regions, and the target recording region includes the second recording region, X being a positive integer.

For example, the X recording regions can be set by a system by default or set by a user. This is not limited in the embodiments of this application.

For example, the first input can specifically be a tap input performed by a user on the second recording region, a voice command input performed by a user, or a specific gesture input performed by a user. The specific type of input can be determined depending on actual usage requirements, and is not limited in the embodiments of this application.

Based on step 201b, the adjusting a recording status corresponding to the target recording region in step 202 can specifically include the following step 202b.

Step 202b: The video recording apparatus starts video recording of a shooting subject corresponding to the second recording region.

For example, the video recording apparatus starting video recording of a shooting subject corresponding to the second recording region can be understood as follows: the video recording apparatus sequentially displays at least one frame of video image captured by a camera corresponding to the second recording region.

It should be noted that in a case that the M recording regions include the N recording regions, the X recording regions are recording regions other than the N recording regions of the M recording regions.

For example, with reference to FIG. 2, when the user wants the mobile phone to start video recording of a shooting subject corresponding to the middle recording region 32, the user can tap the middle recording region 32 (that is, the first input). In this case, the mobile phone can start video recording of the shooting subject corresponding to the middle recording region 32.

Optionally, after step 202, the method may further include the following step 203.

Step 203: The video recording apparatus generates a target video based on videos corresponding to the M recording regions.

For example, in a case that some of the M recording regions have been in a non-recording state all the time, the target video can be composited based on videos corresponding to recording regions other than the recording regions that have been in a non-recording state all the time of the M recording regions.

For example, the video recording apparatus can splice videos corresponding to the M recording regions based on the shooting time to composite the target video. For example, for any shooting moment, the video recording apparatus can splice video frames corresponding to the M recording regions at that shooting moment to composite the target video. The target video can be played in separate regions.

For example, the video recording apparatus can actively perform step 203 or passively perform step 203. This is not limited in the embodiments of this application.

In an example, the video recording apparatus can directly perform step 203 in a case that a recording duration reaches a preset duration.

In another example, the video recording apparatus can perform step 203 after receiving a sixth input performed by a user.

For example, the sixth input can be a tap input performed by a user on the display, a tap input performed by a user on a first control, a voice command input performed by a user, or a specific gesture input performed by a user. The specific type of input can be determined depending on actual usage requirements, and is not limited in the embodiments of this application. For example, the first control may be an existing control or a new control. This is not limited in the embodiments of this application.

For example, with reference to FIG. 2, when the user wants the mobile phone to pause video recording of a shooting subject corresponding to the left recording region 31 and start video recording of a shooting subject corresponding to the middle recording region 32, the user can tap both the left recording region 31 and the middle recording region 32 (that is, the first input). In this case, the mobile phone can pause video recording of the shooting subject corresponding to the left recording region 31 and start video recording of the shooting subject corresponding to the middle recording region 32. When the user wants to end recording, the user can tap a "shoot" control 34 (that is, the sixth input). In this case, the mobile phone can generate a video 1 (that is, the target video) based on videos corresponding to the three recording regions.

According to the video recording method provided in this embodiment of this application, in the case that the rollable display includes M recording regions, the video recording apparatus can adjust the recording status corresponding to the target recording region after receiving the first input performed by a user on the target recording region. The target recording region is at least one of the M recording regions, M being a positive integer greater than or equal to 2. As compared with the related art in which video recording can be started or ended only by tapping a shooting control, the video recording apparatus in this application can split the rollable display into M different recording regions, and based on an input performed by a user, flexibly adjust the recording status corresponding to each recording region, enriching the manners of video file recording.

Optionally, in this embodiment of this application, the user can set the M recording regions depending on needs.

For example, before step 201, the method may further include the following steps 205a to 205d.

Step 205a: The video recording apparatus receives a fourth input performed by a user.

For example, the fourth input can be a tap input performed by a user on the display, a tap input performed by a user on a second control, a voice command input performed by a user, or a specific gesture input performed by a user. The specific type of input can be determined depending on actual usage requirements, and is not limited in the embodiments of this application. For example, the second control may be an existing control or a new control. This is not limited in the embodiments of this application. It can be understood that in a case that the second control is an existing control, the function of displaying a recording region control interface can be added while the existing control functions are retained.

Step 205b: In response to the fourth input, the video recording apparatus displays at least one region control icon.

Each region control icon is used for indicating one recording split template.

For example, the icon in this embodiment of this application can be a text, symbol, pattern, image, or the like used for indicating information. A control or other container may serve as a carrier for displaying information, including but not limited to a text icon, symbol icon, or image icon.

Step 205c: The video recording apparatus receives a fifth input performed by a user on a target region control icon of the at least one region control icon.

For example, the fifth input can be a tap input performed by a user on the target region control icon, a voice command input performed by a user, or a specific gesture input performed by a user. The specific type of input can be determined depending on actual usage requirements, and is not limited in the embodiments of this application.

Step 205d: In response to the fifth input, the video recording apparatus updates recording region layout information of the rollable display according to a target recording split template indicated by the target region control icon.

For example, the layout information includes at least one of the following: split count and split type. It should be noted that the split count refers to the number of recording regions into which the rollable display is split, and the split type refers to the arrangement of recording regions, including but not limited to horizontal arrangement, vertical arrangement, or multi-grid arrangement.

For example, the updating recording region layout information of the rollable display according to a target recording split template indicated by the target region control icon means that the rollable display can be split into the M recording regions according to the target recording split template indicated by the target region control icon.

In an example, the video recording apparatus can display at least one region control icon on a recording region control interface.

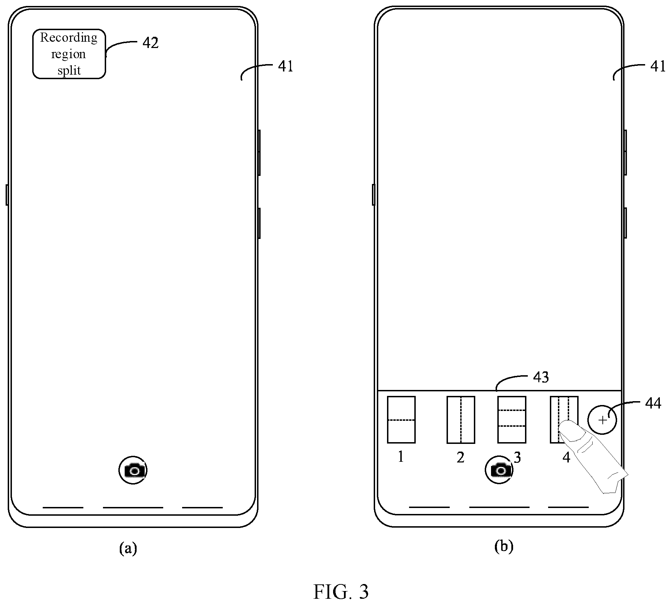

For example, the video recording apparatus can be a mobile terminal, such as a mobile phone. In the following, a mobile phone is used as an example to describe the video recording method provided in this embodiment of this application. When the user wants to record a video using a mobile phone, the user can tap a "record" control. In this case, as shown in (a) of FIG. 3, the mobile phone displays a video recording preview interface 41 on the rollable display. A "recording region split" control 42 is displayed on the video recording preview interface 41. When the user wants to split the recording regions, the user can tap the "recording region split" control 42 (that is, the fourth input). Then, as shown in (b) of FIG. 3, the mobile phone displays a recording region control interface 43 in a floating manner on the video recording preview interface 41, four video recording region control icons being displayed on the recording region control interface 43, which are video recording region control icon 1 to video recording region control icon 4. When the user wants to set three horizontally arranged recording regions, the user can tap video recording region control icon 4 (that is, the fifth input). Subsequently, the mobile phone can update the recording region layout information of the rollable display of the mobile phone according to the region split template for three horizontally arranged recording regions indicated by video recording region control icon 4, so as to split the rollable display into three horizontally arranged recording regions. As shown in FIG. 2, the fully unrolled rollable display includes three horizontally arranged recording regions, which are a left recording region 31, a middle recording region 32, and a right recording region 33.

In an example, as shown in (b) of FIG. 3, a "customize" control 44 is further displayed on the recording region control interface 43. When the user wants to customize the recording region layout on the rollable display, the user can tap the "customize" control 44. In this case, the user can draw a recording region control icon, and the mobile phone can update the recording region layout information of the rollable display of the mobile phone according to a recording split template corresponding to the recording region control icon drawn by a user.

The video recording method provided in this embodiment of this application can be applied in scenarios where region split templates can be selected depending on user requirements. The video recording apparatus can visually display, to the user, icons that indicate recording split templates, making it convenient for the user to select a recording split template depending on an actual need, thereby making recording region split more flexible and convenient.

Optionally, in this embodiment of this application, after step 205c, the method may further include the following step 205e.

Step 205e: In a case that first layout information and second layout information are different, the video recording apparatus adjusts an unrolled state of the rollable display to make the second layout information the same as the first layout information.

The first layout information includes a first split count and a first split type, the second layout information includes a second split count and a second split type, the first split count is a number of regions of the target recording split template, the second split count is the number of recording regions of the rollable display before the fifth input is received, the first split type is a split type of the target recording split template, and the second split type is a split type of the recording regions of the rollable display before the fifth input is received.

For example, the making the second layout information the same as the first layout information can be understood as updating the second layout information to the first layout information.

For example, with reference to FIG. 3, the mobile phone displays a video recording preview interface 41 on the rolled rollable display, and a "recording region split" control 42 is displayed on the video recording preview interface 41. When the user wants to split the recording regions, the user can tap the "recording region split" control 42 (that is, the fourth input). In this case, as shown in (b) of FIG. 3, the mobile phone displays a recording region control interface 43 in a floating manner on the video recording preview interface 41, four video recording region control icons (that is, the at least one region control icon) being displayed on the recording region control interface 43, which are video recording region control icon 1 to video recording region control icon 4. When the user wants to set two vertically arranged recording regions, the user can tap video recording region control icon 1. Subsequently, the mobile phone can update the recording region layout information of the rollable display of the mobile phone according to the region split template for two vertically arranged recording regions indicated by video recording region control icon 1, so as to split the rolled rollable display into two vertically arranged recording regions (that is, the second layout information) which are an upper recording region and a lower recording region, respectively. If the user is not satisfied with the current recording region layout of the rollable display, the user can tap the "recording region split" control 42 again. In this case, the mobile phone displays the recording region control interface 43 again. If the user wants to set three horizontally arranged recording regions, the user can tap video recording region control icon 4 (that is, the fifth input). In this case, the mobile phone can determine that the layout information including three horizontally arranged recording regions is different from the layout information including two vertically arranged recording regions. In this way, the mobile phone can update the recording region layout information of the rollable display of the mobile phone according to the region split template for three horizontally arranged recording regions indicated by video recording region control icon 4, that is, update the layout information including two vertically arranged recording regions to the layout information including three horizontally arranged recording regions. As shown in FIG. 2, the mobile phone can unroll the rollable display, and split the fully unrolled rollable display into three horizontally arranged recording regions (that is, the first layout information), which are a left recording region 31, a middle recording region 32, and a right recording region 33.

The video recording method provided in this embodiment of this application can be applied to scenarios where layout information is updated by adjusting an unrolled state of rollable displays. In a case that the first layout information is different from the second layout information, the video recording apparatus can adjust an unrolled state of the rollable display to make the second layout information the same as the first layout information, thereby updating the second layout information to the first layout information. This achieves fast splitting of the rollable display of the video recording apparatus and enriches the manners of video file recording.

Optionally, in this embodiment of this application, the video recording apparatus can add a recording region during unrolling of the rollable display.

For example, the method can further include the following steps A1 and A2.

Step A1: The video recording apparatus receives a second input performed by a user.

For example, the second input can be a tap input performed by a user on the display, a tap input performed by a user on a target button, a voice command input performed by a user, or a specific gesture input performed by a user. The specific type of input can be determined depending on actual usage requirements, and is not limited in the embodiments of this application. For example, the target button can be a virtual button or a physical button (or referred to as a mechanical button). This is not limited in the embodiments of this application.

Step A2: In response to the second input, the video recording apparatus unrolls the rollable display to a first unrolled state and displays T third recording interfaces in the first unrolled state.

The rollable display in the first unrolled state includes a first unrolled display region, the first unrolled display region includes T third recording interfaces, and the number of the third recording interfaces is determined based on size of the first unrolled display region, T being a positive integer.

For example, the first unrolled display region is a region added after the rollable display is unrolled to the first unrolled state.

For example, the first unrolled state includes any one of the following: a first unrolled length or a first unrolled height. It can be understood that the video recording apparatus unrolling the rollable display to a first unrolled state is the video recording apparatus unrolling the rollable display to the first unrolled length or the video recording apparatus unrolling the rollable display to the first unrolled height.

In an example, the video recording apparatus can directly record videos corresponding to the T third recording interfaces while displaying the T third recording interfaces in the first unrolled state. This is not limited in the embodiments of this application.

For example, different second inputs correspond to different first unrolled states. For example, in a case that the second input is a tap on a control button of the rollable display, the first unrolled length is 2 cm, and in a case that the second input is a double tap on a control button of the rollable display, the first unrolled length is 4 cm.

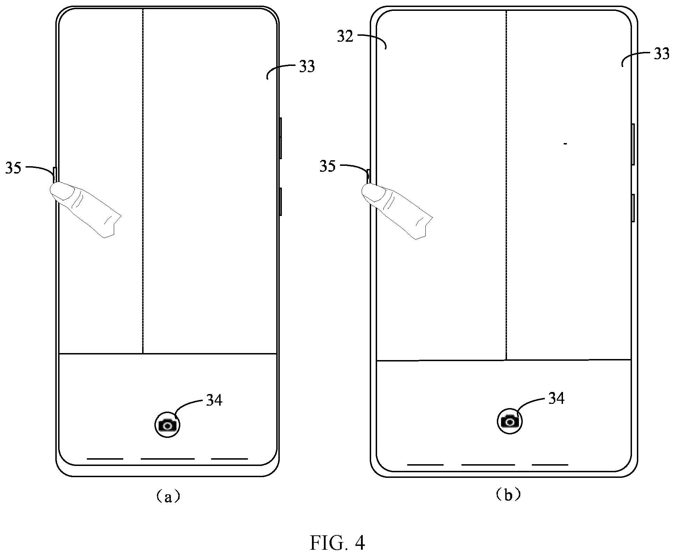

Example 1: In a case that the rollable display of the mobile phone is in a rolled state, with reference to FIG. 2, as shown in (a) of FIG. 4, the rolled rollable display includes a right recording region 33 and a "shoot" control 34. When the user wants to record a video, the user can tap the "shoot" control 34. Then, when the user wants to use a middle recording region to record a video, the user can tap a control button 35 (that is, the target button) of the rollable display. In this case, as shown in (b) of FIG. 4, the mobile phone can unroll the rollable display from right to left by 2 cm. The mobile phone adds the middle recording region 32 (that is, the first unrolled display region) on the unrolled rollable display and displays a corresponding recording interface (that is, the third recording interface) in the middle recording region 32. At this time, the mobile phone can record a video of a shooting subject corresponding to the middle recording region 32. When the user wants to pause video recording of the shooting subject corresponding to the middle recording region 32, the user can tap the middle recording region 32. At this time, the mobile phone can pause video recording of the shooting subject corresponding to the middle recording region 32 and rolls the rollable display back to the rolled state.

Example 2: In a case that the rollable display of a mobile phone is in a rolled state, as shown in FIG. 2 and (a) of FIG. 4, the rolled rollable display includes a right recording region 33 and a "shoot" control 34. When the user wants to record a video, the user can tap the "shoot" control 34. Then, when the user wants to use a left recording region to record a video, the user can double tap a control button 35 (that is, the target button) of the rollable display. At this time, the mobile phone can unroll the rollable display from right to left by 4 cm. As shown in FIG. 2, the mobile phone adds a middle recording region 32 and a left recording region 31 (that is, the first unrolled display region) on the fully unrolled rollable display and displays a corresponding recording interface in the middle recording region 32 and a corresponding recording interface in the left recording region 31 (that is, the T third recording interfaces). At this time, the mobile phone can record a video of a shooting subject corresponding to the left recording region 31 and maintains the middle recording region 32 in a non-recording state. When the user wants to pause video recording of the shooting subject corresponding to the left recording region 31, the user can tap the left recording region 31. At this time, the mobile phone can pause video recording of the shooting subject corresponding to the left recording region 31 and rolls the rollable display back to the rolled state.

In an example, in a case that T is greater than 1, during unrolling the rollable display to the first unrolled state, the video recording apparatus can automatically add one of the T third recording regions on the rollable display each time the rollable display is unrolled by a preset length. The preset length is determined based on the number of the T third recording regions and an unrollable length of the rollable display.

For example, if the unrollable length of the rollable display is 4 cm, with reference to Example 2, during unrolling the rollable display by 4 cm from right to left, the mobile phone can add one recording region each time the rollable display is unrolled by 2 cm. To be specific, in a case that the mobile phone unrolls the rollable display by 2 cm from right to left, the mobile phone automatically adds the middle recording region 32 on the unrolled rollable display, and in a case that the mobile phone unrolls the rollable display by 4 cm from right to left, the mobile phone adds the left recording region 31 on the fully unrolled rollable display.

The video recording method provided in this embodiment of this application can be applied to scenarios where a recording region is added during unrolling of rollable displays. After the number of recording regions is determined, the video recording apparatus can add a recording region on the rollable display during unrolling of the rollable display, and displays a recording interface in the recording region. This not only maximizes the utilization of the rollable display but also improves the flexibility of video recording.

Optionally, in this embodiment of this application, the video recording apparatus can determine a recording region for video recording among the M recording regions based on the unrolled state of the rollable display.

For example, in a case that the video recording apparatus includes M cameras, one recording region corresponding to a recording interface of one camera, the method can further include the following steps B1 to B4.

Step B 1: Receive a third input performed by a user.

For example, the third input can be a tap input performed by a user on the display, a tap input performed by a user on a target button, a voice command input performed by a user, or a specific gesture input performed by a user. The specific type of input can be determined depending on actual usage requirements, and is not limited in the embodiments of this application.

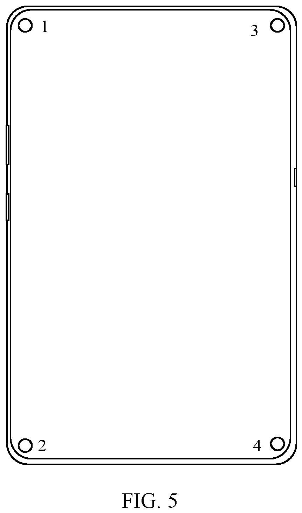

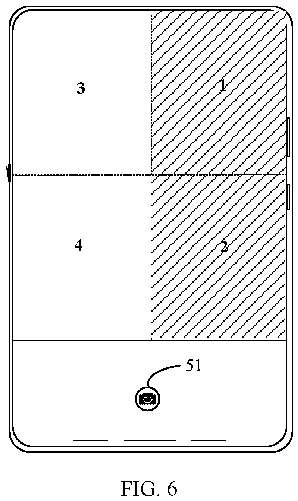

Specifically, the relationship between the M cameras and the M regions of the video apparatus can be described with reference to FIG. 5 and FIG. 6. As shown in FIG. 5, the mobile phone has four rear cameras, which are camera 1 to camera 4, respectively. As shown in FIG. 6, the rolled rollable display of the mobile phone includes four video recording regions, which are video recording region 1 to video recording region 4 respectively. Camera 1 corresponds to video recording region 1, camera 2 corresponds to video recording region 2, camera 3 corresponds to video recording region 3, and camera 4 corresponds to video recording region 4.

Step B2: In response to the third input, the video recording apparatus unrolls the rollable display to a second unrolled state and determining N recording regions corresponding to the second unrolled state.

N ≤ M and N is a positive integer.

For example, different third inputs correspond to different second unrolled states. For example, in a case that the third input is a tap on a control button of the rollable display, the second unrolled length is 1 cm, in a case that the third input is a double tap on a control button of the rollable display, the second unrolled length is 2 cm, in a case that the third input is a triple tap on a control button of the rollable display, the second unrolled length is 3 cm, and so on.

For example, different second unrolled lengths correspond to different recording regions. It can be understood that the second unrolled length can correspond to one recording region or multiple recording regions (that is, a combination of recording regions). This is not limited in the embodiments of this application.

Step B3: The video recording apparatus determines N cameras corresponding to the N recording regions based on preset mappings between cameras and recording regions.

For example, the foregoing mappings can be set by a system by default or set by a user. This is not limited in the embodiments of this application.

It should be noted that due to the limitations of image signal processing (image signal processing, ISP) hardware capabilities, in practical applications, it is assumed that the video recording apparatus can simultaneously enable two cameras for video recording. Therefore, with reference to the mappings between four rear cameras shown in FIG. 5 and four video recording regions shown in FIG. 6, the mappings between second unrolled lengths, recording regions, and cameras can be as shown in Table 1.

**Table 1**

| Recording region | Camera | Second unrolled length |
|---|---|---|
| 1, 2 | 1, 2 | 0 cm |
| 1, 3 | 1, 3 | 1 cm |
| 1, 4 | 1, 4 | 2 cm |
| 2, 3 | 2, 3 | 3 cm |
| 2, 4 | 2, 4 | 4 cm |
| 3, 4 | 3, 4 | Maximum unrollable length (for example, 5 cm) |

Step B4: The video recording apparatus displays recording interfaces of the N cameras in the N recording regions.

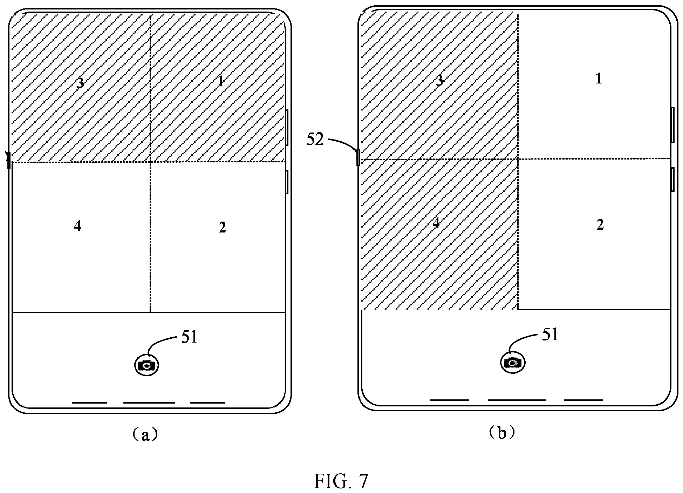

For example, with reference to FIG. 6 and Table 1, in a case that the rollable display of the mobile phone is in a rolled state, if the user wants to record videos of shooting subjects corresponding to a video recording region 1 and a video recording region 2, the user can tap a "shoot" control 51. In this case, the mobile phone determines that the rollable display has an unrolled length of 0 cm, determines the corresponding video recording regions to be video recording region 1 and video recording region 2, and determines, based on Table 1, the corresponding cameras to be camera 1 and camera 2. At this time, the mobile phone can display a recording interface corresponding to camera 1 in video recording region 1 and a recording interface corresponding to camera 2 in video recording region 2, without enabling camera 3 and camera 4. If during recording, the user wants to record videos of shooting subjects corresponding to video recording regions 1 and 3, the user can tap a control button 52 of the rollable display. In this case, as shown in (a) of FIG. 7, the mobile phone unrolls the rollable display by 1 cm, and then determines that the rollable display has an unrolled length of 1 cm, determines the corresponding video recording regions to be video recording region 1 and video recording region 3, and determines, based on Table 1, the corresponding cameras to be camera 1 and camera 3. At this time, the mobile phone can display a recording interface corresponding to camera 1 in video recording region 1 and a recording interface corresponding to camera 3 in video recording region 3, without enabling camera 2 and camera 4. If during recording, the user wants to record videos of shooting subjects corresponding to video recording regions 3 and 4, the user can touch and hold a control button 52 of the rollable display. In this case, as shown in (b) of FIG. 7, the mobile phone unrolls the rollable display by a maximum unrollable length of 5 cm, and then determines that the rollable display has an unrolled length of 5 cm, determines the corresponding video recording regions to be video recording region 3 and video recording region 4, and determines, based on Table 1, the corresponding cameras to be camera 3 and camera 4. At this time, the mobile phone can display a recording interface corresponding to camera 3 in video recording region 3 and a recording interface corresponding to camera 4 in video recording region 4, without enabling camera 1 and camera 2. When the user wants to end video recording, the user can tap a "shoot" control 51. In this case, based on a shooting time, the mobile phone can splice video frames of shooting subjects corresponding to the four video recording regions at a same shooting time to generate a video 2 finally (that is, the target video).

In an example, in a case that a recording interface corresponding to camera 3 is displayed in video recording region 3 to record a video, if the user wants to pause video recording of the shooting subject corresponding to video recording region 3, the user can double tap video recording region 3. In this case, the mobile phone pauses video recording of the shooting subject corresponding to video recording region 3. If the user wants to resumes video recording of the shooting subject corresponding to video recording region 3, the user can double tap video recording region 3. In this case, the mobile phone resumes video recording of the shooting subject corresponding to video recording region 3.

It should be noted that the size of the display screen of each of the four video recording regions is related to the second unrolled state of the rollable display. For example, the size of the display screen of each video recording region can be proportionally zoomed in or out with respect to the second unrolled state of the rollable display.

The video recording method provided in this embodiment of this application can be applied to scenarios where a recording region for video recording is switched based on the unrolled state of rollable displays. The user can adjust the unrolled state of the rollable display depending on needs. The mobile phone can determine different recording regions based on the unrolled state of the rollable display, and enable a corresponding camera for a different recording region, so that a different camera for video recording can be freely selected or switched, thus enriching the manners of video recording.

It should be noted that the video recording method provided in this embodiment of this application may be performed by a video recording apparatus or a control module for performing the video recording method in the video recording apparatus. A video recording apparatus performing the video recording method is used as an example in this embodiment of this application to describe the video recording apparatus provided in this embodiment of this application.

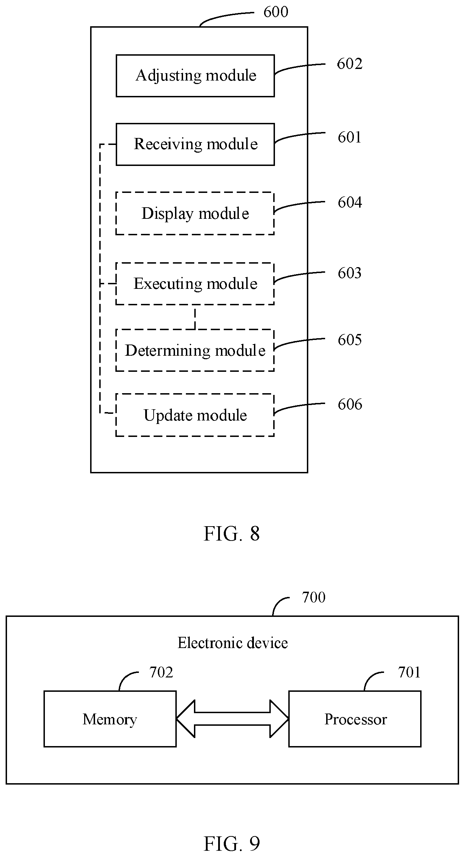

FIG. 8 is a possible schematic structural diagram of a video recording apparatus according to an embodiment of this application. The video recording apparatus includes a rollable display. As shown in FIG. 8, the video recording apparatus 600 includes a receiving module 601 and an adjusting module 602. The receiving module 601 is configured to: in a case that the rollable display includes M recording regions, receive a first input performed by a user on a target recording region, where the target recording region is at least one of the M recording regions. The adjusting module 602 is configured to: in response to the first input received by the receiving module 601, adjust a recording status corresponding to the target recording region, where M is an integer greater than or equal to 2.

Optionally, N recording regions out of the M recording regions are in a recording state, N being a positive integer. The receiving module 601 is specifically configured to receive the first input performed by a user on a first recording region, where the first recording region is at least one of the N recording regions, and the target recording region includes the first recording region. The adjusting module 602 is specifically configured to pause video recording of a shooting subject corresponding to the first recording region.

Optionally, X recording regions out of the M recording regions are in a non-recording state, X being a positive integer. The receiving module 601 is specifically configured to receive the first input performed by a user on a second recording region, where the second recording region is at least one of the X recording regions, and the target recording region includes the second recording region. The adjusting module 602 is specifically configured to start video recording of a shooting subject corresponding to the second recording region.

Optionally, as shown in FIG. 8, the video recording apparatus 600 further includes an executing module 603 and a display module 604. The receiving module 601 is further configured to receive a second input performed by a user. The executing module 603 is configured to: in response to the second input received by the receiving module 601, unroll the rollable display to a first unrolled state. The display module 604 is configured to display T third recording interfaces in the first unrolled state. The rollable display in the first unrolled state includes a first unrolled display region, the first unrolled display region includes T third recording interfaces, and the number of the third recording interfaces is determined based on size of the first unrolled display region, T being a positive integer.

Optionally, as shown in FIG. 8, the video recording apparatus 600 further includes an executing module 603, a determining module 605, and a display module 604, and the video recording apparatus includes M cameras, one recording region corresponding to a recording interface of one camera. The receiving module 601 is further configured to receive a third input performed by a user. The executing module 603 is configured to: in response to the third input received by the receiving module 601, unroll the rollable display to a second unrolled state. The determining module 605 is configured to determine N recording regions corresponding to the second unrolled state, and determine N cameras corresponding to the N recording regions based on preset mappings between cameras and recording regions. The display module 604 is configured to display recording interfaces of the N cameras determined by the determining module 605 on the N recording regions determined by the determining module 605, N ≤ M and N being a positive integer.

Optionally, as shown in FIG. 8, the video recording apparatus 600 further includes a display module 604 and an update module 606. The receiving module 601 is further configured to receive a fourth input performed by the user. The display module 604 is configured to: in response to the fourth input received by the receiving module 601, display at least one region control icon, where each region control icon is used for indicating one recording split template. The receiving module 601 is further configured to receive a fifth input performed by a user on a target region control icon of the at least one region control icon. The update module 606 is configured to: in response to the fifth input received by the receiving module 601, update recording region layout information of the rollable display according to a target recording split template indicated by the target region control icon.

Optionally, the adjusting module 602 is further configured to: in a case that first layout information and second layout information are different, adjust an unrolled state of the rollable display to make the second layout information the same as the first layout information. The first layout information includes a first split count and a first split type, the second layout information includes a second split count and a second split type, the first split count is a number of regions of the target recording split template, the second split count is the number of recording regions of the rollable display before the fifth input is received, the first split type is a split type of the target recording split template, and the second split type is a split type of the recording regions of the rollable display before the fifth input is received.

It should be noted that as shown in FIG. 8, the module that must be included in the video recording apparatus 600 is indicated by a solid line box, such as the receiving module 601. The module that may or may not be included in the video recording apparatus 600 is indicated by a dashed box, such as the display module 604.

According to the video recording apparatus provided in this embodiment of this application, in the case that the rollable display includes M recording regions, the video recording apparatus can adjust the recording status corresponding to the target recording region after receiving the first input performed by a user on the target recording region. The target recording region is at least one of the M recording regions, M being a positive integer greater than or equal to 2. As compared with the related art in which video recording can be started or ended only by tapping a shooting control, the video recording apparatus in this application can split the rollable display into M different recording regions, and based on an input performed by a user, flexibly adjust the recording status corresponding to each recording region, enriching the manners of video file recording.

For the beneficial effects of the various implementations in this embodiment, reference may be specifically made to the beneficial effects of the corresponding implementations in the foregoing method embodiment. To avoid repetition, details are not repeated herein.

The video recording apparatus in this embodiment of this application may be an apparatus or may be a component, an integrated circuit, or a chip in a terminal. The apparatus may be a mobile electronic device or a non-mobile electronic device. For example, the mobile electronic device may be a mobile phone, a tablet computer, a notebook computer, a palmtop computer, a vehicle-mounted electronic device, a wearable device, an ultra-mobile personal computer (ultra-mobile personal computer, UMPC), a netbook, or a personal digital assistant (personal digital assistant, PDA), and the non-mobile electronic device may be a network attached storage (Network Attached Storage, NAS), a personal computer (personal computer, PC), a television (television, TV), a teller machine, a self-service machine, or the like. This is not specifically limited in the embodiments of this application.

The video recording apparatus in this embodiment of this application may be an apparatus with an operating system. The operating system may be an android (Android) operating system, iOS operating system, or other possible operating system. This is not specifically limited in the embodiments of this application.

The video recording apparatus provided in this embodiment of this application can implement the processes implemented in the method embodiments in FIGs. 1 to 7. To avoid repetition, details are not described herein again.

Optionally, as shown in FIG. 9, an embodiment of this application further provides an electronic device 700 including a processor 701, a memory 702, and a program or an instruction stored in the memory 702 and executable on the processor 701. When the program or the instruction is executed by the processor 701, the processes of the foregoing video recording method embodiment are implemented, with the same technical effects achieved. To avoid repetition, details are not described herein again.

It should be noted that the electronic device in this embodiment of this application includes the foregoing mobile electronic device and non-mobile electronic device.

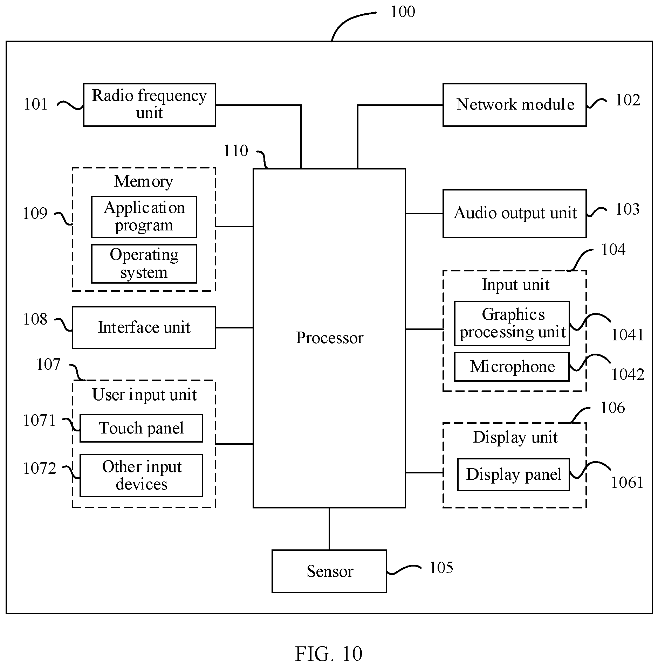

FIG. 10 is a schematic diagram of a hardware structure of an electronic device according to an embodiment of this application.

The electronic device 100 includes but is not limited to components such as a radio frequency unit 101, a network module 102, an audio output unit 103, an input unit 104, a sensor 105, a display unit 106, a user input unit 107, an interface unit 108, a memory 109, and a processor 110.

It can be understood by those skilled in the art that the electronic device 100 may further include a power supply (for example, a battery) supplying power to the components. The power supply may be logically connected to the processor 110 via a power management system, so that functions such as charge management, discharge management, and power consumption management are implemented via the power management system. The structure of the electronic device shown in FIG. 10 does not constitute a limitation on the electronic device. The electronic device may include more or fewer components than shown in the drawing, or combine some of the components, or arrange the components differently. Details are not described herein.

The user input unit 107 is configured to: in a case that the rollable display includes M recording regions, receive a first input performed by a user on a target recording region, where the target recording region is at least one of the M recording regions. The processor 110 is configured to: in response to the first input received by the user input unit 107, adjust a recording status corresponding to the target recording region, where M is an integer greater than or equal to 2.

Optionally, N recording regions out of the M recording regions are in a recording state, N being a positive integer. The user input unit 107 is specifically configured to receive the first input performed by a user on a first recording region, where the first recording region is at least one of the N recording regions, and the target recording region includes the first recording region. The processor 110 is specifically configured to pause video recording of a shooting subject corresponding to the first recording region.

Optionally, X recording regions out of the M recording regions are in a non-recording state, X being a positive integer. The user input unit 107 is specifically configured to receive the first input performed by a user on a second recording region, where the second recording region is at least one of the X recording regions, and the target recording region includes the second recording region. The processor 110 is specifically configured to start video recording of a shooting subject corresponding to the second recording region.

Optionally, the user input unit 107 is further configured to receive a second input performed by the user. The processor 110 is configured to: in response to the second input received by the user input unit 107, unroll the rollable display to a first unrolled state. The display unit 106 is configured to display T third recording interfaces in the first unrolled state. The rollable display in the first unrolled state includes a first unrolled display region, the first unrolled display region includes T third recording interfaces, and the number of the third recording interfaces is determined based on size of the first unrolled display region, T being a positive integer.

Optionally, the video recording apparatus includes M cameras, one recording region corresponding to a recording interface of one camera. The user input unit 107 is further configured to receive a third input performed by the user. The processor 110 is configured to: in response to the third input received by the user input unit 107, unroll the rollable display to a second unrolled state, determine N recording regions corresponding to the second unrolled state, and determine N cameras corresponding to the N recording regions based on preset mappings between cameras and recording regions. The display unit 106 is configured to display recording interfaces of the N cameras determined by the processor 110 on the N recording regions determined by the processor 110, N ≤ M and N being a positive integer.

Optionally, the user input unit 107 is further configured to receive a fourth input performed by the user. The display unit 106 is configured to: in response to the fourth input received by the user input unit 107, display at least one region control icon, where each region control icon is used for indicating one recording split template. The user input unit 107 is further configured to receive a fifth input performed by a user on a target region control icon of the at least one region control icon. The processor 110 is configured to: in response to the fifth input received by the user input unit 107, update recording region layout information of the rollable display according to a target recording split template indicated by the target region control icon.

Optionally, the processor 110 is further configured to: in a case that first layout information and second layout information are different, adjust an unrolled state of the rollable display to make the second layout information the same as the first layout information. The first layout information includes a first split count and a first split type, the second layout information includes a second split count and a second split type, the first split count is a number of regions of the target recording split template, the second split count is the number of recording regions of the rollable display before the fifth input is received, the first split type is a split type of the target recording split template, and the second split type is a split type of the recording regions of the rollable display before the fifth input is received.

According to the electronic device provided in this embodiment of this application, in the case that the rollable display includes M recording regions, the electronic device can adjust the recording status corresponding to the target recording region after receiving the first input performed by a user on the target recording region. The target recording region is at least one of the M recording regions, M being a positive integer greater than or equal to 2. As compared with the related art in which video recording can be started or ended only by tapping a shooting control, the electronic device in this application can split the rollable display into M different recording regions, and based on an input performed by a user, flexibly adjust the recording status corresponding to each recording region, enriching the manners of video file recording.

For the beneficial effects of the various implementations in this embodiment, reference may be specifically made to the beneficial effects of the corresponding implementations in the foregoing method embodiment. To avoid repetition, details are not repeated herein.

It should be understood that in this embodiment of this application, the input unit 104 may include a graphics processing unit (Graphics Processing Unit, GPU) 1041 and a microphone 1042. The graphics processing unit 1041 processes image data of a static picture or a video that is obtained by an image capture apparatus (for example, a camera) in a video capture mode or an image capture mode. The display unit 106 may include a display panel 1061. The display panel 1061 may be configured in a form of a liquid crystal display, an organic light-emitting diode display, or the like. The user input unit 107 includes a touch panel 1071 and other input devices 1072. The touch panel 1071 is also referred to as a touchscreen. The touch panel 1071 may include two parts: a touch detection apparatus and a touch controller. The other input devices 1072 may include but are not limited to a physical keyboard, a function button (for example, a volume control button or a power on/off button), a trackball, a mouse, and a joystick. Details are not described herein. The memory 109 may be configured to store software programs and various data, including but not limited to application programs and operating systems. The processor 110 may integrate an application processor and a modem processor. The application processor mainly processes the operating system, a user interface, an application program, and the like. The modem processor mainly processes wireless communication. It can be understood that the modem processor may alternatively be not integrated in the processor 110.

An embodiment of this application further provides a readable storage medium. The readable storage medium stores a program or an instruction. When the program or the instruction is executed by a processor, the processes of the foregoing video recording method embodiment are implemented, with the same technical effects achieved. To avoid repetition, details are not described herein again.

The processor is the processor in the electronic device in the foregoing embodiments. The readable storage medium includes a computer-readable storage medium such as a computer read-only memory (Read-Only Memory, ROM), a random access memory (Random Access Memory, RAM), a magnetic disk, or an optical disc.

An embodiment of this application further provides a chip. The chip includes a processor and a communications interface. The communications interface is coupled to the processor. The processor is configured to run a program or an instruction to implement the processes of the foregoing video recording method embodiment, with the same technical effects achieved. To avoid repetition, details are not described herein again.

It should be understood that the chip mentioned in the embodiments of this application may also be referred to as a system-level chip, a system chip, a chip system, a system-on-chip, or the like.

It should be noted that the terms "include", "comprise", or any of their variants are intended to cover a non-exclusive inclusion, such that a process, method, article, or apparatus that includes a series of elements includes not only those elements but also other elements that are not expressly listed, or further includes elements inherent to such process, method, article, or apparatus. In absence of more constraints, an element preceded by "includes a... " does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

Based on the foregoing description of the embodiments, persons skilled in the art can clearly understand that the method in the foregoing embodiments may be implemented by software with a necessary general hardware platform. Certainly, the method in the foregoing embodiments may alternatively be implemented by hardware. However, in many cases, the former is a preferred embodiment. Based on such an understanding, the technical solutions of this application essentially, or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other forms without departing from the principle of this application and the protection scope of the claims, and all such forms fall within the protection scope of this application.

## Claims

1. A video recording method applied to a video recording apparatus with a rollable display, wherein the method comprises:
in a case that the rollable display comprises M recording regions, receiving a first input performed by a user on a target recording region, wherein the target recording region is at least one of the M recording regions; and
in response to the first input, adjusting a recording status corresponding to the target recording region, wherein
M is an integer greater than or equal to 2.

2. The video recording method according to claim 1, wherein N recording regions out of the M recording regions are in a recording state, N being a positive integer;
the receiving a first input performed by a user on a target recording region comprises:
receiving the first input performed by a user on a first recording region, wherein the first recording region is at least one of the N recording regions, and the target recording region comprises the first recording region; and
the adjusting a recording status corresponding to the target recording region comprises:
pausing video recording of a shooting subject corresponding to the first recording region.

3. The video recording method according to claim 1 or 2, wherein X recording regions out of the M recording regions are in a non-recording state, X being a positive integer;
the receiving a first input performed by a user on a target recording region comprises:
receiving the first input performed by a user on a second recording region, wherein the second recording region is at least one of the X recording regions, and the target recording region comprises the second recording region; and
the adjusting a recording status corresponding to the target recording region comprises:
starting video recording of a shooting subject corresponding to the second recording region.

4. The video recording method according to claim 1, wherein the method further comprises:
receiving a second input performed by the user; and
in response to the second input, unrolling the rollable display to a first unrolled state and displaying T third recording interfaces in the first unrolled state; wherein
the rollable display in the first unrolled state comprises a first unrolled display region, the first unrolled display region comprises T third recording interfaces, and the number of the third recording interfaces is determined based on size of the first unrolled display region, T being a positive integer.

5. The video recording method according to claim 1, wherein the video recording apparatus comprises M cameras, one recording region corresponding to a recording interface of one camera, and the method further comprises:
receiving a third input performed by the user;
in response to the third input, unrolling the rollable display to a second unrolled state and determining N recording regions corresponding to the second unrolled state;
determining N cameras corresponding to the N recording regions based on preset mappings between cameras and recording regions; and
displaying recording interfaces of the N cameras on the N recording regions, N ≤ M and N being a positive integer.

6. The video recording method according to claim 1, wherein before the in a case that the rollable display comprises M recording regions, receiving a first input performed by a user on a target recording region, the method further comprises:
receiving a fourth input performed by the user;
in response to the fourth input, displaying at least one region control icon, wherein each region control icon is used for indicating one recording split template;
receiving a fifth input performed by a user on a target region control icon of the at least one region control icon; and
in response to the fifth input, updating recording region layout information of the rollable display according to a target recording split template indicated by the target region control icon.

7. The video recording method according to claim 6, after the receiving a fifth input performed by a user on a target region control icon of the at least one region control icon, further comprising:
in a case that first layout information and second layout information are different, adjusting an unrolled state of the rollable display to make the second layout information the same as the first layout information, wherein
the first layout information comprises a first split count and a first split type, the second layout information comprises a second split count and a second split type, the first split count is a number of regions of the target recording split template, the second split count is the number of recording regions of the rollable display before the fifth input is received, the first split type is a split type of the target recording split template, and the second split type is a split type of the recording regions of the rollable display before the fifth input is received.

8. A video recording apparatus, wherein the video recording apparatus comprises a rollable display, and the video recording apparatus comprises a receiving module and an adjusting module; wherein
the receiving module is configured to: in a case that the rollable display comprises M recording regions, receive a first input performed by a user on a target recording region, wherein the target recording region is at least one of the M recording regions; and
the adjusting module is configured to: in response to the first input received by the receiving module, adjust a recording status corresponding to the target recording region, wherein
M is an integer greater than or equal to 2.

9. The video recording apparatus according to claim 8, wherein N recording regions out of the M recording regions are in a recording state, N being a positive integer;
the receiving module is specifically configured to receive the first input performed by a user on a first recording region, wherein the first recording region is at least one of the N recording regions, and the target recording region comprises the first recording region; and
the adjusting module is specifically configured to pause video recording of a shooting subject corresponding to the first recording region.

10. The video recording apparatus according to claim 8 or 9, wherein X recording regions out of the M recording regions are in a non-recording state, X being a positive integer;
the receiving module is specifically configured to receive the first input performed by a user on a second recording region, wherein the second recording region is at least one of the X recording regions, and the target recording region comprises the second recording region; and
the adjusting module is specifically configured to start video recording of a shooting subject corresponding to the second recording region.

11. The video recording apparatus according to claim 8, wherein the video recording apparatus further comprises an executing module and a display module; wherein
the receiving module is further configured to receive a second input performed by the user;
the executing module is configured to: in response to the second input received by the receiving module, unroll the rollable display to a first unrolled state; and
the display module is configured to display T third recording interfaces in the first unrolled state; wherein
the rollable display in the first unrolled state comprises a first unrolled display region, the first unrolled display region comprises T third recording interfaces, and the number of the third recording interfaces is determined based on size of the first unrolled display region, T being a positive integer.

12. The video recording apparatus according to claim 8, wherein the video recording apparatus further comprises an executing module, a determining module, and a display module, and the video recording apparatus comprises M cameras, one recording region corresponding to a recording interface of one camera;
the receiving module is further configured to receive a third input performed by the user;
the executing module is configured to: in response to the third input received by the receiving module, unroll the rollable display to a second unrolled state; and
the determining module is configured to determine N recording regions corresponding to the second unrolled state, and determine N cameras corresponding to the N recording regions based on preset mappings between cameras and recording regions; and
the display module is configured to display recording interfaces of the N cameras determined by the determining module in the N recording regions determined by the determining module, N ≤ M and N being a positive integer.

13. The video recording apparatus according to claim 8, wherein the video recording apparatus further comprises a display module and an update module; wherein
the receiving module is further configured to receive a fourth input performed by the user;
the display module is configured to: in response to the fourth input received by the receiving module, display at least one region control icon, wherein each region control icon is used for indicating one recording split template;
the receiving module is further configured to receive a fifth input performed by a user on a target region control icon of the at least one region control icon; and
the update module is configured to: in response to the fifth input received by the receiving module, update recording region layout information of the rollable display according to a target recording split template indicated by the target region control icon.

14. The video recording apparatus according to claim 13, wherein the adjusting module is further configured to: in a case that first layout information and second layout information are different, adjust an unrolled state of the rollable display to make the second layout information the same as the first layout information, wherein
the first layout information comprises a first split count and a first split type, the second layout information comprises a second split count and a second split type, the first split count is a number of regions of the target recording split template, the second split count is the number of recording regions of the rollable display before the fifth input is received, the first split type is a split type of the target recording split template, and the second split type is a split type of the recording regions of the rollable display before the fifth input is received.

15. An electronic device comprising a processor, a memory, and a program or an instruction stored in the memory and executable on the processor, wherein when the program or the instruction is executed by the processor, the steps of the video recording method according to any one of claims 1 to 7 are implemented.

16. A readable storage medium, wherein the readable storage medium stores a program or an instruction, and when the program or the instruction is executed by a processor, the steps of the video recording method according to any one of claims 1 to 7 are implemented.

17. A chip, wherein the chip comprises a processor and a communication interface, the communication interface is coupled to the processor, and the processor is configured to run a program or an instruction to implement the steps of the video recording method according to any one of claims 1 to 7.
